(19) **Europäisches Patentamt**

**European Patent Office**

**Office européen des brevets**

(11) **EP 1 368 714 B1**

(12) **EUROPÄISCHE PATENTSCHRIFT**

(45) Veröffentlichungstag und Bekanntmachung des Hinweises auf die Patenterteilung:
**10.11.2004 Patentblatt 2004/46**

(21) Anmeldenummer: **02729789.4**

(22) Anmeldetag: **13.03.2002**

(51) Int Cl.$^7$: **G05B 17/02**, G05B 23/02

(86) Internationale Anmeldenummer:
**PCT/DE2002/000899**

(87) Internationale Veröffentlichungsnummer:
**WO 2002/073323 (19.09.2002 Gazette 2002/38)**

(54) **SCHÄTZVERFAHREN FÜR EINE GRÖSSE EINES PROZESSES DER GRUNDSTOFFINDUSTRIE UNTER VERWENDUNG EINER STÜTZVEKTORMETHODE**

ESTIMATION METHOD FOR A VARIABLE OF A PROCESS OF PROCESS MANUFACTURING USING A REFERENCE VECTOR METHOD

PROCEDE D'EVALUATION D'UNE GRANDEUR D'UN PROCESSUS DANS L'INDUSTRIE DES MATIERES PREMIERES AU MOYEN D'UNE METHODE FAISANT APPEL A UN VECTEUR DE SUPPORT

(84) Benannte Vertragsstaaten:
**AT CH DE IT LI SE**

(30) Priorität: **14.03.2001 DE 10112267**

(43) Veröffentlichungstag der Anmeldung:
**10.12.2003 Patentblatt 2003/50**

(73) Patentinhaber: **Siemens Aktiengesellschaft 80333 München (DE)**

(72) Erfinder:
• **REINSCHKE, Johannes 91052 Erlangen (DE)**
• **MIELE, Marco 91052 Erlangen (DE)**

(56) Entgegenhaltungen:
DE-A- 19 727 821          US-A- 5 950 146
US-A- 5 991 525

## Beschreibung

Die vorliegende Erfindung betrifft ein Schätzverfahren für eine Prozessgröße eines Prozesses der Grundstoffindustrie,

- wobei eine Anzahl von Wertepaaren vorgegeben wird,
- wobei jedes Wertepaar einen Vektor von erfassbaren Signalen des Prozesses und einen mit diesem Vektor korrespondierenden Messwert für die zu schätzende Prozessgröße aufweist,
- wobei anhand der Anzahl von Wertepaaren ein empirisches Modell für die Abhängigkeit der Prozessgröße von den erfassbaren Signalen erstellt wird,
- wobei aufgrund des Modells während des Ablaufs des Prozesses anhand mindestens eines weiteren Vektors von erfassbaren Signalen ein Schätzwert für die Prozessgröße ermittelt wird,
- wobei dem Modell mindestens ein weiteres Wertepaar vorgegeben wird, dessen Vektor während des Prozesses ermittelt worden ist und dessen Messwert nach dem Ermitteln des Vektors ermittelt worden ist,
- wobei das erstellte Modell anhand des mindestens einen weiteren Wertepaares auf einem Prozessautomatisierungsrechner angepasst wird.

Derartige Schätzverfahren sind, z.B. auf der Basis neuronaler Netze, allgemein bekannt. Beispielhaft wird auf die DE 197 27 821 A1 verwiesen.

Die bislang in der Grundstoffindustrie verwendeten Schätzverfahren wie neuronale Netze oder klassische Regressionsverfahren weisen Probleme auf. Oft skaliert der Trainingsaufwand für das Modell ungünstig mit der Dimension der Eingangsvektoren. Im ungünstigsten Fall steigt der Trainingsaufwand exponentiell an. Häufig beruht das Trainingsverfahren auf einem nichtlinearen Optimierungsverfahren. Dies kann dazu führen, dass das globale Optimum möglicherweise nicht gefunden und/oder der Rechenzeitbedarf zu groß wird.

Diese Problematiken kommen noch mehr zum Tragen, wenn das Modelltraining nicht offline, sondern online erfolgen soll, d.h. auf einem der Rechner der Prozessautomatisierung (Prozesssteuerung bzw. -regelung) der Anlage. Denn für das Training (d.h. das Erstellen bzw. Anpassen des empirischen Modells anhand der Wertepaare) steht online - im Gegensatz zum offline - in der Regel nur eine relativ kurze und klar begrenzte Zeitspanne zur Verfügung. Ferner muss der Trainingsvorgang online absolut zuverlässig ablaufen.

Die Aufgabe der vorliegenden Erfindung besteht darin, ein Schätzverfahren für ein empirisches Modell zu schaffen, das auch bei einem höherdimensionalen Eingangsgrößenvektor zuverlässig und mit akzeptablem Rechenaufwand trainierbar ist.

Die Aufgabe wird dadurch gelöst, dass das Modell ein Stützvektormodell ist.

Denn bei Stützvektormethoden steigt der Aufwand zum Trainieren des Modells sowohl bezüglich der Zahl der zum Training verwendeten Ein/Ausgangswertepaare als auch bezüglich der Dimension des Eingangsgrößenvektors nur linear an. Geeignete Trainingsverfahren für das Modell sind "Stückelungsmethoden" (engl. "chunking methods"), z.B die gemäß Joachims oder die "Sequentielle Minimale Optimierung" (engl. "Sequential Minimal Optimisation") gemäß Platt. Denn diese Verfahren arbeiten zuverlässig und schnell.

Stützvektormethoden bzw. Stützvektormodelle sind durch die folgenden Eigenschaften charakterisiert:

a) Ein Stützvektormodell ist (bis auf einen Offset) eine Linearkombination von symmetrischen Kernfunktionen, die sich mathematisch als Skalarprodukt zweier identischer Funktionen schreiben lassen.

b) Die Koeffizienten in der in (a) genannten Linearkombination werden durch Lösen eines konvexen Optimierungsproblems (z.B. eines linearen oder quadratischen Programmierungsproblems) bestimmt.

Stützvektormethoden und Stützvektormodelle sind z. B. in den Monographien

"Advances in Kernel Methods - Support Vector Learning" von B. Schölkopf, C.J.C. Burges, A.J. Smola, MIT Press, Cambridge (Mass.), London 1999 und

"An introduction to Support Vector Machines and other kernelbased learning methods" von N. Cristianini, J. Shawe-Taylor, Cambridge University Press 2000

eingehend beschrieben. Darin sind auch die oben genannten Trainingsverfahren gemäß Joachims bzw. Platt dargestellt und weitere Fachliteratur genannt.

Bei der empirischen Modellierung und insbesondere bei Stützvektormethoden unterscheidet man Modelle, bei denen die Ausgangsgröße stetig vom Eingangsgrößenvektor abhängt, und Modelle, bei denen die Ausgangsgröße nur diskrete Werte, insbesondere binäre Werte (also 0 und 1) annehmen kann. Die erstgenannten Modelle werden in der Literatur auch als Regressionsmethoden bezeichnet, die zweitgenannten als Klassifikations- oder Mustererkennungsverfahren.

Regressionsmethoden werden in der Regel zur Vorhersage von physikalischen Prozessgrößen innerhalb der Prozessautomatisierung (Prozesssteuerung und -regelung) einer Anlage verwendet, während Klassifikations- bzw. Mustererkennungsverfahren z.B. zur Fehler- bzw. Störungserkennung in der Anlage dienen.

Wenn das Modell analytisch partiell nach den erfassbaren Signalen ableitbar ist, ist der online-Rechenaufwand minimal.

Die symmetrischen Kernfunktionen können z. B. Gaußsche radiale Basisfunktionen sein.

Wenn das mindestens eine weitere Wertepaar zwischengespeichert wird und das Anpassen des Modells anhand des mindestens einen weiteren Wertepaares zu einem späteren Zeitpunkt erfolgt, kann das Anpassen des Modells während Zeiten erfolgen, in denen die Rechenleistung des zum Anpassen eingesetzten Rechners nicht anderweitig benötigt wird.

Wenn die Abhängigkeit mehrerer Prozessgrößen von einem Vektor von erfassbaren Signalen durch ein empirisches Modell beschrieben werden soll, so ist ein solches Modell äquivalent zu einer entsprechenden Anzahl von empirischen Modellen, die die Abhängigkeit je einer dieser Prozessgrößen beschreiben.

Der Prozess kann prinzipiell beliebiger Natur sein. Insbesondere kann er ein Kohle- und Erzaufbereitungsprozess, ein Verhüttungsprozess, ein Stahlerzeugungsprozess, ein Gießprozess, ein Walzprozess sowie ein Zellstoff- und Papiererzeugungsoder -verarbeitungsprozess sein.

Anhand der nachfolgenden Beschreibung eines Ausführungsbeispiels wird ein Verfahren zur Erstellung online-fähiger empirischer Modelle mittels Stützvektormethoden beschrieben. Dabei zeigen in Prinzipdarstellung

FIG 1    eine Anlage der Grundstoffindustrie und
FIG 2    ein Ablaufdiagramm.

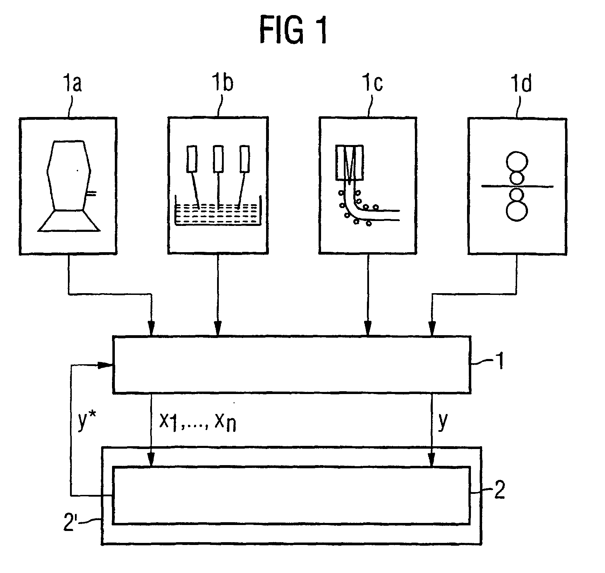

Gemäß FIG 1 soll für einen Prozess 1 der Grundstoffindustrie eine Prozessgröße des Prozesses 1 geschätzt werden. Der Prozess 1 kann dabei ein beliebiger Prozess 1 der Grundstoffindustrie sein. Schematisch dargestellt sind in FIG 1 ein Verhüttungsprozess 1a, ein Stahlerzeugungsprozess 1b, ein Gießprozess 1c und ein Walzprozess 1d. Es kommen aber auch andere Prozesse in Frage, insbesondere ein Aufbereitungsprozess für Kohle- oder Erz und ein Erzeugungsoder Verarbeitungsprozess für Zellstoff oder Papier.

Zur Online-Schätzung der Prozessgröße wird zunächst eine bestimmte Art eines Stützvektormodells 2 zusammen mit einer Trainingsmethode ausgewählt. Dabei muss beachtet werden, dass die Trainingsmethode bezüglich Rechenzeit und Zuverlässigkeit online-fähig ist, d.h. auf einem Prozessautomatisierungsrechner 2' für den Prozess 1 einsetzbar ist. Denn auf dem Prozessautomatisierungsrechner 2' der Anlage ist das Schätzverfahren vorzugsweise implementiert. Als Stützvektormodell 2 kann z.B. - aber nicht notwendigerweise - das in US-A-5,950, 146 beschriebene Stützvektormodell gemäß Vapnik herangezogen werden.

Ferner wird von der Anlage, auf der der Prozess 1 abläuft, (oder einer ähnlichen Anlage) eine Anzahl N von Wertepaaren gesammelt. Die Wertepaare bestehen jeweils aus einem Vektor von erfassbaren Signalen $x_1^i$, ..., $x_n^i$, von denen die zu schätzende Prozessgröße abhängt, und einem zu diesem Vektor korrespondierenden Messwert $y^i$ für die zu schätzende Prozessgröße (i = 1, ..., N). Diese Anzahl N von Wertepaaren wird zum Offline-Training eines Stützvektormodells 2 der gewählten Art verwendet. Es wird also anhand der Anzahl N von Wertepaaren ein empirisches Stützvektormodell 2 für die Abhängigkeit der Prozessgröße von den erfassbaren Signalen erstellt. Das derart vortrainierte Stützvektormodell 2 wird dann zusammen mit der gewählten Online-Trainingsmethode auf dem Prozessautomatisierungsrechner 2' der Anlage implementiert.

Zur Online-Schätzung der Prozessgröße wird ein Vektor von erfassbaren Signalen $x_1$, ..., $x_n$ des Prozesses 1 dem Stützvektormodell 2 als Eingangsgrößenvektor zugeführt. Das Stützvektormodell 2 ermittelt dann anhand des zugeführten Vektors während des Ablaufs des Prozesses 1 einen Schätzwert y* für die Prozessgröße.

Der tatsächliche Wert y der Prozessgröße kann häufig ebenfalls anhand des Prozesses 1 (allerdings immer erst im nachhinein) ermittelt werden. Dieser Wert y wird zusammen mit dem Eingangsgrößenvektor dem Stützvektormodell 2 zum online-Training zugeführt. Anhand des aus Eingangsgrößenvektor und Prozessgröße gebildeten Wertepaares, also einerseits des Vektors von erfassbaren Signalen $x_1$, ..., $x_n$ sowie andererseits des korrespondierenden Messwerts y für die Prozessgröße, wird das Stützvektormodell 2 dann online (d.h. auf dem Prozessautomatisierungsrechner 2') nachtrainiert bzw. angepasst.

Das Erstellen und Anpassen des Modells 2 erfolgt vorzugsweise gemäß einer "Stückelungsmethode" ("chunking method") wie sie z. B. von Joachims beschrieben ist oder wie sie als sogenannte "Sequentielle Minimale Optimierung" ("Sequential Minimal Optimisation") von Platt entwickelt worden ist.

Bei hinreichender freier Rechenkapazität des Prozessautomatisierungsrechners 2' kann das Anpassen des Modells 2 unmittelbar nach dem Ermitteln des neuen Wertepaares erfolgen. In der Regel wird es aber sinnvoller sein, das weitere Wertepaar - ggf. mehrere weitere Wertepaare - zwischenzuspeichern und das Anpassen des Modells 2 zu einem späteren Zeitpunkt mit den bis dahin akkumulierten Wertepaaren vorzunehmen.

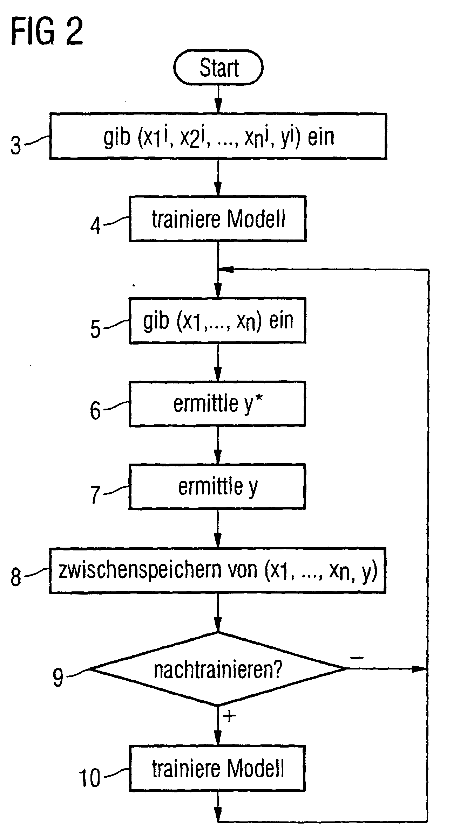

Der obenstehende Ablauf auf dem Prozessautomatisierungsrechners 2' wird nachfolgend in Verbindung mit FIG 2 nochmals erläutert.

Gemäß FIG 2 wird dem Modell 2 in einem Schritt 3 eine Anzahl N von Wertepaaren vorgegeben. Jedes Wertepaar besteht dabei aus einem Vektor von erfassbaren Signalen $x_1^i$, ..., $x_n^i$ und einem zu diesem Vektor korrespondierenden Messwert $y^i$ für die zu schätzende Prozessgröße. Anhand dieser Wertepaare wird dann in einem Schritt 4 das Modell 2 trainiert.

Sodann wird in einem Schritt 5 dem Stützvektormodell 2 ein Vektor von erfassbaren Signalen $x_1$, ..., $x_n$ eingegeben. Es ermittelt daraufhin in einem Schritt 6 einen Schätzwert y* für die Prozessgröße. Sodann wird in einem Schritt 7 der tatsächliche Wert y der Prozessgröße ermittelt. Der Vektor von erfassbaren Signalen $x_1$, ..., $x_n$ wird zusammen mit dem Wert y in einem Schritt 8 zwischengespeichert. Dann wird in einem Schritt 9 abgefragt, ob ein Nachtrainieren des Modells 2 erfolgen soll. Je nach dem Ergebnis der Abfrage wird entweder zum Schritt 5 zurückgesprungen oder in einem Schritt 10 ein Nachtraining des Modells 2 vorgenommen.

Stützvektormodelle zur Modellierung stetiger Prozessgrößen sind z. B. von der Form

$$f(x) = \sum_{j=1}^{N} w_j \, k(x, x^j) + b.$$

k ist eine symmetrische Kernfunktion, die sich mathematisch als Skalarprodukt zweier identischer Funktionen schreiben lässt. Als Kernfunktionen k kommen z. B. Gaußsche radiale Basisfunktionen $k(x^i, x^j) = \exp(-|x^i - x^j|^2/c)$ in Frage. Alternativen, die anwendungsabhängig evtl. günstiger sein können, sind in den beiden genannten Monographien angegeben.

Das gesamte Stützvektormodell 2 ist eine Linearkombination dieser Funktionen k. $x^j$ (j = 1, ..., N) sind die Eingangsvektoren der zum Training verwendeten Wertepaare. $w_j$ und b sind vom Trainingsverfahren zu bestimmende Koeffizienten.

Die Kernfunktionen k sind analytisch gegebene, in der Regel mehrfach stetig differenzierbare Funktionen. Es ist daher möglich, die partiellen Ableitungen nach allen Komponenten des Eingangsgrößenvektors x in analytischer Form zu bilden. Dadurch, dass das gesamte Stützvektormodell 2 eine Linearkombination dieser Kernfunktionen k ist, lassen sich somit vorab auch sog. Modellsensitivitäten (= partielle Ableitungen der zu schätzenden Prozessgröße bzw. des Modells 2 nach den erfassbaren Signalen $x_1$, ..., $x_n$) analytisch bilden und im Stützvektormodell 2 hinterlegen. Analytisch hinterlegte Modellsensivitäten haben gegenüber numerisch bestimmten Sensitivitäten den Vorteil einer höheren Genauigkeit bei in der Regel geringerem Rechenaufwand.

Falls nicht eine kontinuierliche, sondern eine diskrete Prozessgröße modelliert werden soll, wird in der obenstehend beschriebenen Weise zunächst eine stetige Zwischengröße ermittelt, auf die eine geeignete Diskretisierungsfunktion, z.B. die Signumfunktion, angewendet wird.

Obenstehend wurde ein Schätzverfahren für eine einzelne skalare Prozessgröße beschrieben. Wenn die Abhängigkeit mehrerer Prozessgrößen von einem Vektor von erfassbaren Signalen durch ein empirisches Modell 2 beschrieben werden soll, so ist ein solches Modell 2 äquivalent zu einer entsprechenden Anzahl von empirischen Modellen, die die Abhängigkeit je einer dieser Prozessgrößen beschreiben.

**Patentansprüche**

1. Schätzverfahren für eine Prozessgröße eines Prozesses (1) der Grundstoffindustrie,

   - wobei eine Anzahl (N) von Wertepaaren vorgegeben wird,
   - wobei jedes Wertepaar einen Vektor von erfassbaren Signalen ($x_1^i$, ..., $x_n^i$) des Prozesses (1) und einen mit diesem Vektor korrespondierenden Messwert ($y^i$) für die zu schätzende Prozessgröße aufweist,
   - wobei anhand der Anzahl (N) von Wertepaaren ein empirisches Modell (2) für die Abhängigkeit der Prozessgröße von den erfassbaren Signalen ($x_1$, ..., $x_n$) erstellt wird,
   - wobei aufgrund des Modells (2) während des Ablaufs des Prozesses (1) anhand mindestens eines weiteren Vektors von erfassbaren Signalen ($x_1$, ..., $x_n$) ein Schätzwert (y*) für die Prozessgröße ermittelt wird,
   - wobei dem Modell (2) mindestens ein weiteres Wertepaar vorgegeben wird, dessen Vektor während des Prozesses (1) ermittelt worden ist und dessen Messwert (y) nach dem Ermitteln des Vektors ermittelt worden ist,
   - wobei das erstellte Modell (2) anhand des mindestens einen weiteren Wertepaares auf einem Prozessautomatisierungsrechner angepasst wird,
   - wobei das Modell (2) ein Stützvektormodell (2) ist.

2. Schätzverfahren nach Anspruch 1, **dadurch gekennzeichnet dass** die Prozessgröße nur diskrete Werte annehmen kann.

3. Schätzverfahren nach Anspruch 1, **dadurch gekennzeichnet, dass** die Prozessgröße kontinuierliche Werte annehmen kann.

4. Schätzverfahren nach Anspruch 3, **dadurch gekennzeichnet, dass** das Model (2) analytisch partiell nach den erfassbaren Signalen ($x_1$, ..., $x_n$) ableitbar ist.

5. Schätzverfahren nach Anspruch 3 oder 4, **dadurch gekennzeichnet, dass** das Stützvektormodell (2) als symmetrische Kernfunktionen (k) Gaußsche radiale Basisfunktionen enthält.

6. Schätzverfahren nach einem der obigen Ansprüche, **dadurch gekennzeichnet, dass** das Erstellen und Anpassen des Modells (2) gemäß einer Stückelungsmethode (chunking method) erfolgt.

7. Schätzverfahren nach Anspruch 6, **dadurch gekennzeichnet, dass** die Stückelungsmethode als Sequentielle Minimale Optimierung (Sequential Minimal Optimisation) ausgebildet ist.

8. Schätzverfahren nach einem der obigen Ansprüche, **dadurch gekennzeichnet, dass** das mindestens eine weitere Wertepaar zwischengespeichert wird und dass das Anpassen des Modells (2) anhand des mindestens einen weiteren Wertepaares zu einem späteren Zeitpunkt erfolgt.

9. Schätzverfahren für mehrere Prozessgrößen eines Prozesses der Grundstoffindustrie, **dadurch gekennzeichnet, dass** für jede der Prozessgrößen ein Schätzverfahren nach einem der obigen Ansprüche angewendet wird.

10. Schätzverfahren nach einem der obigen Ansprüche, **dadurch gekennzeichnet dass** der Prozess (1) ein Kohle- und Erzaufbereitungsprozess, ein Verhüttungsprozess (1a), ein Stahlerzeugungsprozess (1b), ein Gießprozess (1c), ein Walzprozess (1d), oder ein Zellstoff- und Papiererzeugungs- oder -verarbeitungsprozess ist.


**Claims**

1. Estimation method for a process variable in a process (1) in the process manufacturing industry,

   - with a number (N) of value pairs being predetermined,
   - with each value pair having a vector of detectable signals $(x_1^i, ..., x_n^i)$ for the process (1) and having a measured value $(y^i)$ which corresponds to this vector, for the process variable to be estimated,
   - with an empirical model (2) for the relationship between the process variable and the detectable signals $(x_1, ..., x_n)$ being produced on the basis of the number (N) of value pairs,
   - with an estimated value $(y^*)$ for the process variable being determined on the basis of the model (2) while the process (1) is being carried out, on the basis of at least one further vector of detectable signals $(x_1, ..., x_n)$,
   - with at least one further value pair being predetermined for the model (2), whose vector has been determined during the process (1) and whose measured value (y) has been determined after the determination of the vector,
   - with the model (2) that is produced being matched to a process automation computer on the basis of the at least one further value pair, and
   - with the model (2) being a reference vector model (2).

2. Estimation method according to Claim 1, **characterized in that** the process variable can assume any discrete values.

3. Estimation method according to Claim 1, **characterized in that** the process variable can assume continuous values.

4. Estimation method according to Claim 3, **characterized in that** the model (2) can be derived analytically, partially on the basis of the detectable signals $(x_1, ..., x_n)$.

5. Estimation method according to Claim 3 or 4, **characterized in that** the reference vector model (2) contains Gaussian radial basic functions as symmetrical core functions (k).

6. Estimation method according to one of the above claims, **characterized in that** the production and matching of the model (2) are carried out using a chunking method.

7. Estimation method according to Claim 6, **characterized in that** the chunking method is in the form of sequential minimal optimization.

8. Estimation method according to one of the above claims, **characterized in that** the at least one further value pair is temporarily stored, and **in that** the matching of the model (2) is carried out on the basis of the at least one further value pair at a later time.

9. Estimation method for two or more process variables in a process in the process manufacturing industry, **characterized in that** an estimation method according to one of the above claims is used for each of the process variables.

10. Estimation method according to one of the above claims, **characterized in that** the process (1) is a carbon and ore conditioning process, a smelting process (1a), a steel production process (1b), a casting process (1c), a rolling process (1d) or a pulp and paper production or processing process.


**Revendications**

1. Procédé d'évaluation d'une grandeur d'un procédé (1) de l'industrie des matières premières,

   - un nombre (N) de couples de valeurs étant prescrit,
   - chaque couple de valeurs comportant un vecteur de signaux $(X_1^i, ..., X_n^i)$ détectables du procédé (1) et une valeur $(y_i)$ de mesure, correspondant à ce vecteur, pour la grandeur de procédé à évaluer,

- un modèle (2) empirique étant produit à l'aide du nombre (N) de couples de valeurs pour la dépendance de la grandeur de procédé vis-à-vis des indices $(x_1,...,x_n)$ détectables,
- une valeur (y*)d'évaluation étant déterminée pour la grandeur de procédé sur la base du modèle (2) pendant le déroulement du procédé (1) à l'aide d'au moins un vecteur supplémentaire de signaux $(x_1,..,x_n)$ détectables,
- étant prescrit au modèle (2) au moins un couple de valeurs supplémentaires, dont le vecteur a été déterminé pendant le procédé (1) et dont la valeur (y) de mesure a été déterminée après la détermination du vecteur,
- le modèle (2) obtenu étant adapté à un ordinateur d'automatisation de procédé à l'aide du au moins un couple de valeurs supplémentaires,
- le modèle (2) étant un modèle (2) à vecteur de référence.

2. Procédé d'évaluation suivant la revendication 1, **caractérisé en ce que** la grandeur de procédé ne peut prendre que des valeurs discrètes.

3. Procédé d'évaluation suivant la revendication 1, **caractérisé en ce que** la grandeur de procédé ne peut prendre que des valeurs continues.

4. Procédé d'évaluation suivant la revendication 3, **caractérisé en ce que** le modèle (2) peut être déduit de manière analytique partiellement d'après les signaux $(x_1,...,x_n)$ détectables.

5. Procédé d'évaluation suivant la revendication 3 ou 4, **caractérisé en ce que** le modèle (2) à vecteur de référence contient comme fonctions noyaux (k) symétriques des fonctions de base radiales gaussiennes.

6. Procédé d'évaluation suivant l'une des revendications précédentes, **caractérisé en ce que** la production et l'adaptation du modèle (2) s'effectue suivant une méthode de composition des solutions (chunking method).

7. Procédé d'évaluation suivant la revendication 6, **caractérisé en ce que** la méthode de composition des solutions est conformée en optimisation minimale séquentielle (Sequential Minimal Optimisation).

8. Procédé d'évaluation suivant ;l'une des revendications précédentes, **caractérisé en ce que** le au moins un couple de valeurs supplémentaires est mis en mémoire intermédiaire et **en ce que** l'adaptation du modèle (2) s'effectue à l'aide du au moins un couple de valeurs supplémentaires à un instant ultérieur.

9. Procédé d'évaluation pour plusieurs grandeurs de procédé d'un procédé de l'industrie des matières premières, **caractérisé en ce que** l'on utilise, pour chacune des grandeurs de procédé, un procédé d'évaluation suivant l'une des revendications précédentes.

10. Procédé d'évaluation suivant l'une des revendications précédentes, **caractérisé en ce que** le procédé (1) est un procédé de préparation de charbon et de minerai, un procédé (1a) de traitement métallurgique, un procédé (1b) de production d'acier, un procédé (1c) de coulée, un procédé (1d) de laminage ou un procédé de production ou de traitement de pâte à papier ou de papier.

# FIG 1

# FIG 2

Start

3 — gib $(x1^i, x2^i, ..., xn^i, y^i)$ ein

4 — trainiere Modell

5 — gib $(x1,..., xn)$ ein

6 — ermittle $y^*$

7 — ermittle $y$

8 — zwischenspeichern von $(x1, ..., xn, y)$

9 — nachtrainieren?

—

+

10 — trainiere Modell